(19) Europäisches Patentamt
European Patent Office
Office européen des brevets

(11) **EP 3 270 611 A1**

(12) **EUROPÄISCHE PATENTANMELDUNG**

(43) Veröffentlichungstag:
**17.01.2018   Patentblatt 2018/03**

(51) Int Cl.:
**H04W 4/00** (2018.01)   **H04W 4/20** (2018.01)
**H04L 29/08** (2006.01)

(21) Anmeldenummer: **16179555.4**

(22) Anmeldetag: **14.07.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Deutsche Telekom AG**
**53113 Bonn (DE)**

(72) Erfinder: **Neubacher, Andreas**
**A-2100 Korneuburg (AT)**

(74) Vertreter: **Patentship**
**Patentanwaltsgesellschaft mbH**
**Elsenheimerstraße 65**
**80687 München (DE)**

(54) **DETEKTIONSVORRICHTUNG ZUM DETEKTIEREN EINER PHYSIKALISCHEN GRÖSSE**

(57)   Die Erfindung betrifft eine Detektionsvorrichtung (100) zum Detektieren einer physikalischen Größe, wobei die Detektionsvorrichtung (100) einer Gruppe von Detektionsvorrichtungen (100) zugeordnet ist, wobei jeder Detektionsvorrichtung (100) der Gruppe von Detektionsvorrichtungen (100) ein vorbestimmter Spreizcode fest zugeordnet ist, wobei die Gruppe von Detektionsvorrichtungen (100) ausgebildet ist, über ein Kommunikationsnetzwerk mit einer Serverentität zu kommunizieren, mit einem Detektor (101) zum Detektieren der physikalischen Größe, wobei der Detektor (101) ausgebildet ist, Daten auszugeben, welche die physikalische Größe repräsentieren, einem Hardwarespeicher (103), in welchem ein vorbestimmter Spreizcode zum Spreizen der Daten implementiert ist, wobei der vorbestimmte Spreizcode der Detektionsvorrichtung (100) fest zugeordnet ist, und einer Kommunikationsschnittstelle (105), welche ausgebildet ist, die Daten auf der Basis des vorbestimmten Spreizcodes zu spreizen, um gespreizte Daten zu erhalten, und die gespreizten Daten über das Kommunikationsnetzwerk an die Serverentität auszusenden.

Fig. 1

EP 3 270 611 A1

**Beschreibung**

TECHNISCHES GEBIET

Die vorliegende Erfindung betrifft das Gebiet der Detektion einer physikalischen Größe und der Übertragung von Daten, welche die physikalische Größe repräsentieren, über ein Kommunikationsnetzwerk.

TECHNISCHER HINTERGRUND

Unter dem Begriff des Internets der Dinge (engl. Internet of Things, IoT) wird die Vernetzung physikalischer Objekte über ein Kommunikationsnetzwerk verstanden, wodurch beispielsweise eine effizientere Überwachung der physikalischen Objekte und ein Austausch von Informationen über die physikalischen Objekte ermöglicht wird.

Das Internet der Dinge ist insbesondere im Bereich der Hausautomatisierungstechnik und Industrieautomatisierungstechnik von zunehmender Bedeutung, wobei unterschiedliche physikalische Größen, wie beispielsweise eine Temperatur oder ein Energieverbrauch, effizient detektiert werden sollen. Im Bereich der Hausautomatisierungstechnik werden beispielsweise Heizungssensoren zur Abrechnung der Heizungskosten zunehmend mit entsprechender Funktionalität ausgestattet. Im Bereich der Industrieautomatisierung sollen beispielsweise Produktionsabläufe optimiert und effizienter durchgeführt werden. Entsprechende Ansätze hierfür werden zumeist unter dem Begriff der Industrie 4.0 zusammengefasst.

Zur Detektion der physikalischen Größe sowie zur Übertragung der Daten, welche die physikalische Größe repräsentieren, werden üblicherweise kostengünstige Geräte eingesetzt. Der Zugriff auf den Kommunikationskanal wird dabei typischerweise nicht mittels komplexer Verfahren zur Medienzugriffssteuerung (engl. Media Access Control, MAC) gesteuert. Die Daten, welche die physikalische Größe repräsentieren, werden daher zumeist unkoordiniert ausgesendet. Dies kann jedoch zu Kollisionen und Verlusten von Daten auf dem Kommunikationskanal führen.

BESCHREIBUNG DER ERFINDUNG

Es ist daher die Aufgabe der vorliegenden Erfindung, ein effizientes Konzept zur Medienzugriffssteuerung auf einem Kommunikationskanal zu schaffen.

Diese Aufgabe wird durch die Merkmale der unabhängigen Ansprüche gelöst. Vorteilhafte Ausführungsformen der Erfindung sind Gegenstand der Beschreibung, der Zeichnungen sowie der abhängigen Ansprüche.

Die vorliegende Erfindung basiert auf der Erkenntnis, dass die obige Aufgabe durch eine Detektionsvorrichtung gelöst werden kann, in welcher ein vorbestimmter Spreizcode zum Spreizen von Daten implementiert ist, wobei der vorbestimmte Spreizcode der Detektionsvorrichtung fest zugeordnet ist. Die Detektionsvorrichtung kann einer Gruppe von Detektionsvorrichtungen zugeordnet sein, wobei jeder Detektionsvorrichtung der Gruppe ein jeweiliger vorbestimmter Spreizcode fest zugeordnet ist, und wobei die vorbestimmten Spreizcodes unterschiedlich sein können. Mithin kann innerhalb der Gruppe von Detektionsvorrichtungen eine Medienzugriffssteuerung basierend auf einem Code-Division-Multiple-Access (CDMA) Ansatz realisiert werden. Die Detektionsvorrichtungen der Gruppe können jeweils ortsfest angeordnet sein. Die Detektionsvorrichtungen der Gruppe können über ein Kommunikationsnetzwerk mit einer Serverentität kommunizieren, welche gespreizte Daten empfangen und basierend auf dem vorbestimmten Spreizcode der jeweiligen Detektionsvorrichtung die jeweiligen Daten bestimmen kann.

Dadurch wird erreicht, dass ein Zugriff der Gruppe von Detektionsvorrichtungen auf den Kommunikationskanal effizient realisiert werden kann und zugleich eine kostengünstige Implementierung der einzelnen Detektionsvorrichtungen möglich wird.

Gemäß einem ersten Aspekt betrifft die Erfindung eine Detektionsvorrichtung zum Detektieren einer physikalischen Größe, wobei die Detektionsvorrichtung einer Gruppe von Detektionsvorrichtungen zugeordnet ist, wobei jeder Detektionsvorrichtung der Gruppe von Detektionsvorrichtungen ein vorbestimmter Spreizcode fest zugeordnet ist, wobei die Gruppe von Detektionsvorrichtungen ausgebildet ist, über ein Kommunikationsnetzwerk mit einer Serverentität zu kommunizieren, mit einem Detektor zum Detektieren der physikalischen Größe, wobei der Detektor ausgebildet ist, Daten auszugeben, welche die physikalische Größe repräsentieren, einem Hardwarespeicher, in welchem ein vorbestimmter Spreizcode zum Spreizen der Daten implementiert ist, wobei der vorbestimmte Spreizcode der Detektionsvorrichtung fest zugeordnet ist, und einer Kommunikationsschnittstelle, welche ausgebildet ist, die Daten auf der Basis des vorbestimmten Spreizcodes zu spreizen, um gespreizte Daten zu erhalten, und die gespreizten Daten über das Kommunikationsnetzwerk an die Serverentität auszusenden. Dadurch wird der Vorteil erreicht, dass ein effizientes Konzept zur Medienzugriffssteuerung auf einem Kommunikationskanal realisiert werden kann.

Die Spreizung der Daten kann eine spektrale Spreizung der Daten sein. Zur Spreizung der Daten kann ein Direct-Sequence-Spread-Spectrum (DSSS) Ansatz verwendet werden. Innerhalb der Gruppe von Detektionsvorrichtungen kann mithin ein Code-Division-Multiple-Access (CDMA) Ansatz zur Medienzugriffssteuerung realisiert werden.

Gemäß einer Ausführungsform ist die Kommunikationsschnittstelle ausgebildet, die gespreizten Daten zu einem vorbestimmten Sendezeitpunkt an die Serverentität auszusenden. Dadurch wird der Vorteil erreicht, dass Interferenzen auf dem Kommunikationskanal effizient reduziert werden können.

Gemäß einer Ausführungsform ist der Detektionsvorrichtung eine vorbestimmte Identitätskennung zugeordnet, wobei der Detektor ausgebildet ist, die Daten mit der vorbestimmten Identitätskennung zu verknüpfen, wobei die Kommunikationsschnittstelle ausgebildet ist, die Daten mit der vorbestimmten Identitätskennung auf der Basis des vorbestimmten Spreizcodes zu spreizen, um die gespreizten Daten zu erhalten. Dadurch wird der Vorteil erreicht, dass die ausgesendeten gespreizten Daten der Detektionsvorrichtung durch die Serverentität effizient zugeordnet werden können.

Die vorbestimmte Identitätskennung kann der Detektionsvorrichtung bei deren Herstellung fest zugeordnet werden. Die vorbestimmte Identitätskennung kann beispielsweise eine Media Access Control (MAC) Adresse oder eine International Mobile Station Equipment Identity (IMEI) Nummer sein, welche der Detektionsvorrichtung zugeordnet ist.

Gemäß einer Ausführungsform ist die vorbestimmte Identitätskennung der Detektionsvorrichtung eine Netzwerkadresse der Detektionsvorrichtung. Dadurch wird der Vorteil erreicht, dass die ausgesendeten gespreizten Daten der Detektionsvorrichtung durch die Serverentität effizient zugeordnet werden können.

Die Netzwerkadresse kann der Detektionsvorrichtung beispielweise durch die Serverentität über das Kommunikationsnetzwerk zugewiesen werden. Die Netzwerkadresse der Detektionsvorrichtung kann eine Internet Protocol (IP) Adresse, beispielsweise eine IPv4-Adresse oder eine IPv6-Adresse, sein.

Gemäß einer Ausführungsform umfasst die Detektionsvorrichtung einen Energiespeicher, insbesondere eine Batterie, zum Versorgen der Detektionsvorrichtung mit elektrischer Energie, wobei die Kommunikationsschnittstelle ausgebildet ist, den vorbestimmten Sendezeitpunkt in Abhängigkeit eines Ladezustandes des Energiespeichers zu bestimmen. Dadurch wird der Vorteil erreicht, dass eine effizientere Übertragung der gespreizten Daten über den Kommunikationskanal realisiert werden kann.

Beispielsweise kann im Falle eines hohen Ladezustandes des Energiespeichers ein Aussenden der gespreizten Daten zu einem früheren Zeitpunkt erfolgen und im Falle eines geringen Ladezustandes des Energiespeichers ein Aussenden der gespreizten Daten zu einem späteren Zeitpunkt erfolgen.

Gemäß einer Ausführungsform ist der Detektor ausgebildet, die detektierte physikalische Größe mit einer vorbestimmten physikalischen Referenzgröße zu vergleichen, wobei die Kommunikationsschnittstelle ausgebildet ist, die gespreizten Daten auszusenden, falls die detektierte physikalische Größe die vorbestimmte physikalische Referenzgröße überschreitet. Dadurch wird der Vorteil erreicht, dass eine effiziente Überwachung der physikalischen Größe durch die Detektionsvorrichtung realisiert werden kann. Die Daten werden folglich nur ausgesendet, falls die detektierte physikalische Größe die vorbestimmte physikalische Referenzgröße überschreitet.

Gemäß einer Ausführungsform ist der Detektor ausgebildet, eine Temperatur, eine Feuchtigkeit, eine Energie, eine Leistung, eine Position, eine Geschwindigkeit, eine Beschleunigung, einen Winkel, eine Winkelgeschwindigkeit, eine Winkelbeschleunigung, eine Drehzahl, eine Kraft, ein Drehmoment, einen Energieverbrauch, einen Wasserverbrauch, einen Wärmeverbrauch oder einen Kraftstoffverbrauch als physikalische Größe zu bestimmen. Der Detektor kann hierfür einen Sensor zum Bestimmen der physikalischen Größe umfassen. Dadurch wird der Vorteil erreicht, dass physikalische Größen, welche im Bereich der Heimautomatisierungstechnik sowie im Bereich der Industrieautomatisierungstechnik von Bedeutung sind, effizient bestimmt werden können.

Gemäß einer Ausführungsform ist der Hardwarespeicher ein Festwertspeicher, wobei der vorbestimmte Spreizcode der Detektionsvorrichtung in dem Hardwarespeicher fest verdrahtet abgelegt ist. Dadurch wird der Vorteil erreicht, dass die Detektionsvorrichtung effizient implementiert werden kann.

Der vorbestimmte Spreizcode kann bei der Herstellung der Detektionsvorrichtung in dem Festwertspeicher abgelegt werden. Der Festwertspeicher ist ein Nur-Lese-Speicher (engl. Read-Only Memory, ROM), auf welchen im Betrieb nur lesend zugegriffen werden kann.

Gemäß einer Ausführungsform ist der vorbestimmte Spreizcode ein Walsh-Code, ein Gold-Code oder ein Kasami-Code. Dadurch wird der Vorteil erreicht, dass vorteilhafte Korrelationseigenschaften der vorbestimmten Spreizcodes der Gruppe von Detektionsvorrichtungen zur Medienzugriffssteuerung genutzt werden können. Die vorbestimmten Spreizcodes innerhalb der Gruppe können jeweils hohe Autokorrelationskoeffizienten aufweisen. Die vorbestimmten Spreizcodes innerhalb der Gruppe können gegenseitig geringe Kreuzkorrelationskoeffizienten aufweisen.

Gemäß einer Ausführungsform umfasst das Kommunikationsnetzwerk eine Mehrzahl von Subnetzwerken, wobei die Kommunikationsschnittstelle ausgebildet ist, die gespreizten Daten über ein Subnetzwerk der Mehrzahl von Subnetzwerken an die Serverentität auszusenden. Dadurch wird der Vorteil erreicht, dass die Mehrzahl von Subnetzwerken auf verschiedene Anwendungen ausgelegt werden können und eine effizientere Übertragung der Daten über das Kommunikationsnetzwerk realisiert werden kann.

Gemäß einer Ausführungsform ist das Kommunikationsnetzwerk ein Kommunikationsnetzwerk der fünften Generation (5G) oder einer weiteren Generation, wobei jedes Subnetzwerk ein Slice des Kommunikationsnetzwerkes ist. Dadurch wird der Vorteil erreicht, dass eine effiziente Übertragung der Daten über ein Kommunikationsnetzwerk der fünften Generation (5G) oder einer weiteren Generation realisiert werden kann.

Gemäß einer Ausführungsform ist die Detektionsvorrichtung ortsfest angeordnet. Dadurch wird der Vorteil erreicht, dass die Eigenschaften des Kommunikationskanals zwischen der Detektionsvorrichtung und der Serverentität geringere Variationen aufweisen. Mithin können die Detektionsvorrichtung und/oder die Serverentität effizienter implementiert werden.

Gemäß einem zweiten Aspekt betrifft die Erfindung eine Gruppe von Detektionsvorrichtungen, wobei jeder Detektionsvorrichtung der Gruppe von Detektionsvorrichtungen ein vorbestimmter Spreizcode zum Spreizen von Daten fest zugeordnet ist, und wobei die vorbestimmten Spreizcodes unterschiedlich sind. Dadurch wird der Vorteil erreicht, dass ein effizientes Konzept zur Medienzugriffssteuerung auf einem Kommunikationskanal realisiert werden kann.

Die Spreizung der Daten kann eine spektrale Spreizung der Daten sein. Zur Spreizung der Daten kann ein Direct-Sequence-Spread-Spectrum (DSSS) Ansatz verwendet werden. Innerhalb der Gruppe von Detektionsvorrichtungen kann mithin ein Code-Division-Multiple-Access (CDMA) Ansatz zur Medienzugriffssteuerung realisiert werden.

Gemäß einer Ausführungsform ist jede Detektionsvorrichtung der Gruppe von Detektionsvorrichtungen ortsfest angeordnet. Dadurch wird der Vorteil erreicht, dass die Eigenschaften des jeweiligen Kommunikationskanals zwischen der jeweiligen Detektionsvorrichtung und der Serverentität geringere Variationen aufweisen. Mithin können die Detektionsvorrichtungen und/oder die Serverentität effizienter implementiert werden.

Die gegenseitigen Abstände zwischen den Detektionsvorrichtungen der Gruppe können zeitlich konstant sein. Die Anordnung der Detektionsvorrichtungen innerhalb der Gruppe kann mithin stationär sein.

Gemäß einem dritten Aspekt betrifft die Erfindung eine Serverentität zum Kommunizieren mit einer Detektionsvorrichtung über ein Kommunikationsnetzwerk, wobei die Detektionsvorrichtung einer Gruppe von Detektionsvorrichtungen zugeordnet ist, wobei jeder Detektionsvorrichtung der Gruppe von Detektionsvorrichtungen ein vorbestimmter Spreizcode fest zugeordnet ist, wobei die Gruppe von Detektionsvorrichtungen ausgebildet ist, über das Kommunikationsnetzwerk mit der Serverentität zu kommunizieren, wobei die Detektionsvorrichtung ausgebildet ist, eine physikalische Größe zu detektieren, wobei die Detektionsvorrichtung ausgebildet ist, Daten auszugeben, welche die physikalische Größe repräsentieren, wobei in der Detektionsvorrichtung ein vorbestimmter Spreizcode zum Spreizen der Daten implementiert ist, wobei der vorbestimmte Spreizcode der Detektionsvorrichtung fest zugeordnet ist, wobei die Detektionsvorrichtung ausgebildet ist, die Daten auf der Basis des vorbestimmten Spreizcodes zu spreizen, um gespreizte Daten zu erhalten, und die gespreizten Daten über das Kommunikationsnetzwerk an die Serverentität auszusenden, mit einer Kommunikationsschnittstelle, welche ausgebildet ist, die gespreizten Daten von der Detektionsvorrichtung über das Kommunikationsnetzwerk zu empfangen, einem Speicher, in welchem der vorbestimmte Spreizcode der Detektionsvorrichtung abgelegt ist, wobei der vorbestimmte Spreizcode der Detektionsvorrichtung fest zugeordnet ist, und einem Prozessor, welcher ausgebildet ist, die gespreizten Daten auf der Basis des vorbestimmten Spreizcodes der Detektionsvorrichtung zu entspreizen, um die Daten zu erhalten. Dadurch wird der Vorteil erreicht, dass ein effizientes Konzept zur Medienzugriffssteuerung auf einem Kommunikationskanal realisiert werden kann.

Die Serverentität kann eine Basisstation sein, wobei die Basisstation ausgebildet ist, über ein Funkkommunikationsnetzwerk als Kommunikationsnetzwerk mit der Detektionsvorrichtung zu kommunizieren. Die Serverentität kann ferner ein Controller sein, wobei der Controller einem Rücktransportnetzwerk (engl. backhaul network) des Kommunikationsnetzwerkes zugeordnet ist.

Die Kommunikationsschnittstelle, der Speicher und der Prozessor können einen Rake-Empfänger zum Entspreizen der gespreizten Daten bilden.

Gemäß einem vierten Aspekt betrifft die Erfindung ein Kommunikationssystem, mit einer Gruppe von Detektionsvorrichtungen, wobei jeder Detektionsvorrichtung der Gruppe von Detektionsvorrichtungen ein vorbestimmter Spreizcode zum Spreizen von Daten fest zugeordnet ist, und wobei die vorbestimmten Spreizcodes unterschiedlich sind, und einer Serverentität, welche ausgebildet ist, mit jeder Detektionsvorrichtung der Gruppe über ein Kommunikationsnetzwerk zu kommunizieren. Dadurch wird der Vorteil erreicht, dass ein effizientes Konzept zur Medienzugriffssteuerung auf einem Kommunikationskanal realisiert werden kann.

Gemäß einer Ausführungsform umfasst das Kommunikationssystem eine weitere Gruppe von Detektionsvorrichtungen, wobei jeder Detektionsvorrichtung der weiteren Gruppe von Detektionsvorrichtungen ein vorbestimmter Spreizcode zum Spreizen von Daten fest zugeordnet ist, und wobei die vorbestimmten Spreizcodes unterschiedlich sind, und eine weitere Serverentität, welche ausgebildet ist, mit jeder Detektionsvorrichtung der weiteren Gruppe über das Kommunikationsnetzwerk zu kommunizieren. Dadurch wird der Vorteil erreicht, dass die vorbestimmten Spreizcodes der Gruppe sowie die vorbestimmten Spreizcodes der weiteren Gruppe effizient verwaltet werden können.

Die Serverentität und die weitere Serverentität können über das Kommunikationsnetzwerk miteinander kommunizieren.

Gemäß einer Ausführungsform ist das Kommunikationsnetzwerk ein Kommunikationsnetzwerk der fünften Generation (5G) oder einer weiteren Generation, wobei das Kommunikationsnetzwerk ein Subnetzwerk, insbesondere ein Slice, und ein weiteres Subnetzwerk, insbesondere ein weiteres Slice, umfasst, wobei die Gruppe von Detektionsvorrichtungen und die Serverentität dem Subnetzwerk zugeordnet sind, und wobei die weitere Gruppe von Detektionsvorrichtungen und die weitere Serverentität dem weiteren Subnetzwerk zugeordnet sind. Dadurch wird der Vorteil erreicht, dass eine effiziente Übertragung der Daten über ein Kommunikationsnetzwerk der fünften Generation (5G) oder einer weiteren Generation realisiert werden kann.

Gemäß einem fünften Aspekt betrifft die Erfindung ein Verfahren zum Detektieren einer physikalischen Größe unter Verwendung einer Detektionsvorrichtung, wobei die Detektionsvorrichtung einen Detektor, einen Hardwarespeicher und eine Kommunikationsschnittstelle umfasst, wobei in dem Hardwarespeicher ein vorbestimmter Spreizcode zum Spreizen von Daten implementiert ist, wobei der vorbestimmte Spreizcode der Detektionsvorrichtung fest zugeordnet ist, wobei die Detektionsvorrichtung einer Gruppe von Detektionsvorrichtungen zugeordnet ist, wobei jeder Detektionsvorrichtung der Gruppe von Detektionsvorrichtungen ein vorbestimmter Spreizcode fest zugeordnet ist, wobei die Gruppe von Detektionsvorrichtungen ausgebildet ist, über ein Kommunikationsnetzwerk mit einer Serverentität zu kommunizieren, mit einem Detektieren der physikalischen Größe durch den Detektor, einem Ausgeben der Daten durch den Detektor, welche die physikalische Größe repräsentieren, einem Spreizen der Daten auf der Basis des vorbestimmten Spreizcodes durch die Kommunikationsschnittstelle, um gespreizte Daten zu erhalten, und einem Aussenden der gespreizten Daten über das Kommunikationsnetzwerk an die Serverentität durch die Kommunikationsschnittstelle. Dadurch wird der Vorteil erreicht, dass ein effizientes Konzept zur Medienzugriffssteuerung auf einem Kommunikationskanal realisiert werden kann.

Das Verfahren kann durch die Detektionsvorrichtung ausgeführt werden. Weitere Merkmale des Verfahrens ergeben sich unmittelbar aus der Funktionalität und/oder den Merkmalen der Detektionsvorrichtung.

Gemäß einem sechsten Aspekt betrifft die Erfindung ein Verfahren zum Kommunizieren mit einer Detektionsvorrichtung über ein Kommunikationsnetzwerk unter Verwendung einer Serverentität, wobei die Serverentität eine Kommunikationsschnittstelle, einen Speicher und einen Prozessor umfasst, wobei in dem Speicher ein vorbestimmter Spreizcode der Detektionsvorrichtung abgelegt ist, wobei der vorbestimmte Spreizcode der Detektionsvorrichtung fest zugeordnet ist, wobei die Detektionsvorrichtung einer Gruppe von Detektionsvorrichtungen zugeordnet ist, wobei jeder Detektionsvorrichtung der Gruppe von Detektionsvorrichtungen ein vorbestimmter Spreizcode fest zugeordnet ist, wobei die Gruppe von Detektionsvorrichtungen ausgebildet ist, über das Kommunikationsnetzwerk mit der Serverentität zu kommunizieren, wobei die Detektionsvorrichtung ausgebildet ist, eine physikalische Größe zu detektieren, wobei die Detektionsvorrichtung ausgebildet ist, Daten auszugeben, welche die physikalische Größe repräsentieren, wobei in der Detektionsvorrichtung der vorbestimmte Spreizcode zum Spreizen der Daten implementiert ist, wobei der vorbestimmte Spreizcode der Detektionsvorrichtung fest zugeordnet ist, wobei die Detektionsvorrichtung ausgebildet ist, die Daten auf der Basis des vorbestimmten Spreizcodes zu spreizen, um gespreizte Daten zu erhalten, und die gespreizten Daten über das Kommunikationsnetzwerk an die Serverentität auszusenden, mit einem Empfangen der gespreizten Daten von der Detektionsvorrichtung über das Kommunikationsnetzwerk durch die Kommunikationsschnittstelle, und einem Entspreizen der gespreizten Daten auf der Basis des vorbestimmten Spreizcodes der Detektionsvorrichtung durch den Prozessor, um die Daten zu erhalten. Dadurch wird der Vorteil erreicht, dass ein effizientes Konzept zur Medienzugriffssteuerung auf einem Kommunikationskanal realisiert werden kann.

Das Verfahren kann durch die Serverentität ausgeführt werden. Weitere Merkmale des Verfahrens ergeben sich unmittelbar aus der Funktionalität und/oder den Merkmalen der Serverentität.

Gemäß einem siebten Aspekt betrifft die Erfindung ein Computerprogramm mit einem Programmcode zum Ausführen des Verfahrens zum Detektieren einer physikalischen Größe oder des Verfahrens zum Kommunizieren mit einer Detektionsvorrichtung, wenn der Programmcode auf einem Computer ausgeführt wird. Dadurch wird der Vorteil erreicht, dass die Verfahren automatisiert ausgeführt werden können.

Die Detektionsvorrichtung und/oder die Serverentität können programmtechnisch eingerichtet sein, um den Programmcode auszuführen.

Die Erfindung kann in Hardware und/oder in Software realisiert werden.

BESCHREIBUNG DER FIGUREN

Weitere Ausführungsbeispiele werden bezugnehmend auf die beiliegenden Zeichnungen näher erläutert. Es zeigen:

Fig. 1 ein schematisches Diagramm einer Detektionsvorrichtung zum Detektieren einer physikalischen Größe gemäß einer Ausführungsform;

Fig. 2 ein schematisches Diagramm einer Gruppe von Detektionsvorrichtungen zum Detektieren einer physikalischen Größe gemäß einer Ausführungsform;

Fig. 3 ein schematisches Diagramm einer Serverentität zum Kommunizieren mit einer Detektionsvorrichtung über ein Kommunikationsnetzwerk gemäß einer Ausführungsform;

Fig. 4 ein schematisches Diagramm eines Kommunikationssystems gemäß einer Ausführungsform;

Fig. 5 ein schematisches Diagramm eines Verfahrens zum Detektieren einer physikalischen Größe unter Verwendung einer Detektionsvorrichtung gemäß einer Ausführungsform;

Fig. 6 ein schematisches Diagramm eines Verfahrens zum Kommunizieren mit einer Detektionsvorrichtung über ein Kommunikationsnetzwerk unter Verwendung einer Serverentität gemäß einer Ausführungsform;

Fig. 7 ein schematisches Diagramm eines Kommunikationssystems gemäß einer Ausführungsform;

Fig. 8 ein schematisches Diagramm einer Detektionsvorrichtung zum Detektieren einer physikalischen Größe gemäß einer Ausführungsform;

Fig. 9 ein schematisches Diagramm einer Serverentität zum Kommunizieren mit einer Detektionsvorrichtung über ein Kommunikationsnetzwerk gemäß einer Ausführungsform;

Fig. 10 ein schematisches Diagramm eines Schieberegisters einer Detektionsvorrichtung zum Spreizen von Daten gemäß einer Ausführungsform;

Fig. 11 ein schematisches Diagramm eines Kommunikationssystems gemäß einer Ausführungsform; und

Fig. 12 ein schematisches Diagramm eines Kommunikationssystems gemäß einer Ausführungsform.

## DETAILIERTE BESCHREIBUNG DER FIGUREN

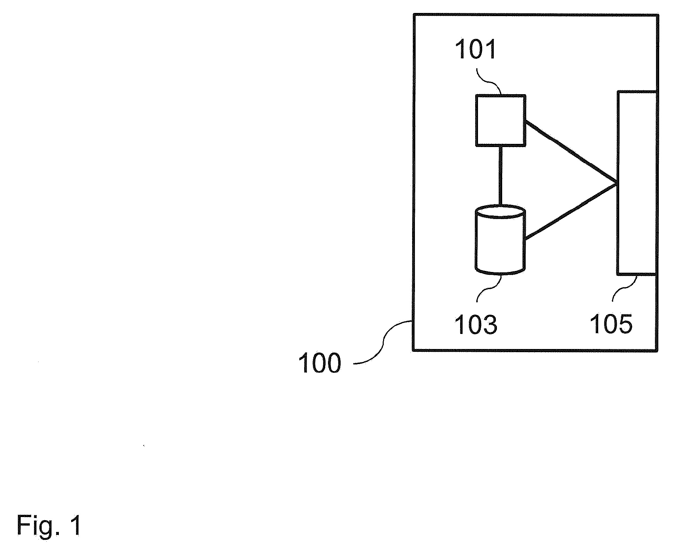

Fig. 1 zeigt ein schematisches Diagramm einer Detektionsvorrichtung 100 zum Detektieren einer physikalischen Größe gemäß einer Ausführungsform.

Die Detektionsvorrichtung 100 ist einer Gruppe von Detektionsvorrichtungen 100 zugeordnet, wobei jeder Detektionsvorrichtung 100 der Gruppe von Detektionsvorrichtungen 100 ein vorbestimmter Spreizcode fest zugeordnet ist, wobei die Gruppe von Detektionsvorrichtungen 100 ausgebildet ist, über ein Kommunikationsnetzwerk mit einer Serverentität zu kommunizieren.

Die Detektionsvorrichtung 100 umfasst einen Detektor 101 zum Detektieren der physikalischen Größe, wobei der Detektor 101 ausgebildet ist, Daten auszugeben, welche die physikalische Größe repräsentieren. Die Detektionsvorrichtung 100 umfasst ferner einen Hardwarespeicher 103, in welchem ein vorbestimmter Spreizcode zum Spreizen der Daten implementiert ist, wobei der vorbestimmte Spreizcode der Detektionsvorrichtung 100 fest zugeordnet ist. Die Detektionsvorrichtung 100 umfasst ferner eine Kommunikationsschnittstelle 105, welche ausgebildet ist, die Daten auf der Basis des vorbestimmten Spreizcodes zu spreizen, um gespreizte Daten zu erhalten, und die gespreizten Daten über das Kommunikationsnetzwerk an die Serverentität auszusenden.

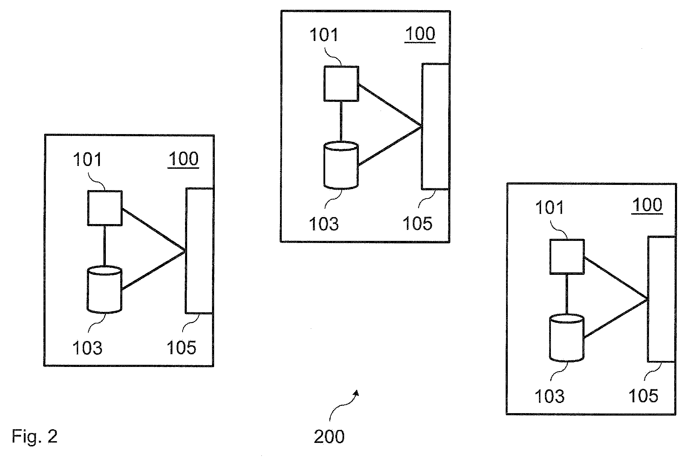

Fig. 2 zeigt ein schematisches Diagramm einer Gruppe 200 von Detektionsvorrichtungen 100 zum Detektieren einer physikalischen Größe gemäß einer Ausführungsform.

Jede Detektionsvorrichtung 100 umfasst jeweils einen Detektor 101, einen Hardwarespeicher 103 und eine Kommunikationsschnittstelle 105. Jeder Detektionsvorrichtung 100 der Gruppe 200 von Detektionsvorrichtungen 100 ist ein vorbestimmter Spreizcode zum Spreizen von Daten fest zugeordnet. Die vorbestimmten Spreizcodes sind unterschiedlich. Jede Detektionsvorrichtung 100 der Gruppe 200 kann ortsfest angeordnet sein.

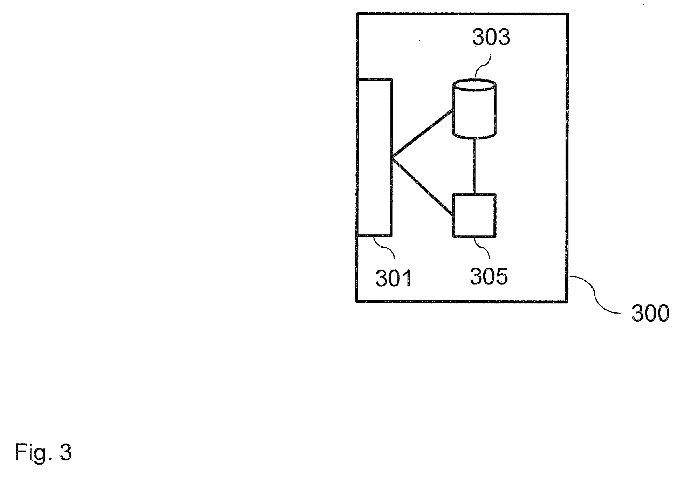

Fig. 3 zeigt ein schematisches Diagramm einer Serverentität 300 zum Kommunizieren mit einer Detektionsvorrichtung über ein Kommunikationsnetzwerk gemäß einer Ausführungsform.

Die Detektionsvorrichtung ist einer Gruppe von Detektionsvorrichtungen zugeordnet, wobei jeder Detektionsvorrichtung der Gruppe von Detektionsvorrichtungen ein vorbestimmter Spreizcode fest zugeordnet ist. Die Gruppe von Detektionsvorrichtungen ist ausgebildet, über das Kommunikationsnetzwerk mit der Serverentität 300 zu kommunizieren.

Die Detektionsvorrichtung ist ausgebildet, eine physikalische Größe zu detektieren. Die Detektionsvorrichtung ist ferner ausgebildet, Daten auszugeben, welche die physikalische Größe repräsentieren. In der Detektionsvorrichtung ist ein vorbestimmter Spreizcode zum Spreizen der Daten implementiert, wobei der vorbestimmte Spreizcode der Detektionsvorrichtung fest zugeordnet ist. Die Detektionsvorrichtung ist ausgebildet, die Daten auf der Basis des vorbestimmten Spreizcodes zu spreizen, um gespreizte Daten zu erhalten, und die gespreizten Daten über das Kommunikationsnetzwerk an die Serverentität 300 auszusenden.

Die Serverentität 300 umfasst eine Kommunikationsschnittstelle 301, welche ausgebildet ist, die gespreizten Daten von der Detektionsvorrichtung über das Kommunikationsnetzwerk zu empfangen, einen Speicher 303, in welchem der vorbestimmte Spreizcode der Detektionsvorrichtung abgelegt ist, wobei der vorbestimmte Spreizcode der Detektionsvorrichtung fest zugeordnet ist, und einen Prozessor 305, welcher ausgebildet ist, die gespreizten Daten auf der Basis des vorbestimmten Spreizcodes der Detektionsvorrichtung zu entspreizen, um die Daten zu erhalten.

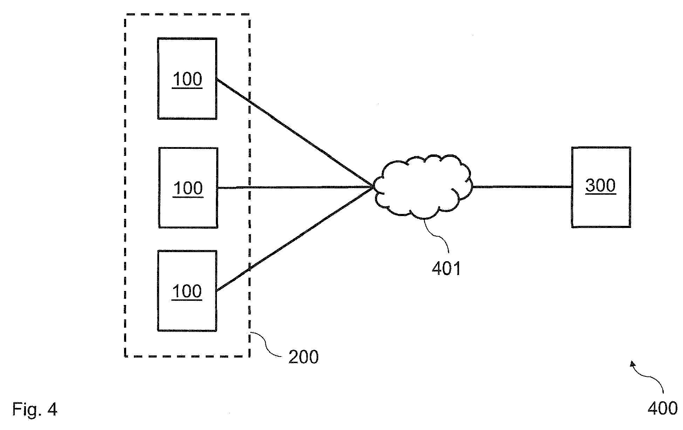

Fig. 4 zeigt ein schematisches Diagramm eines Kommunikationssystems 400 gemäß einer Ausführungsform.

Das Kommunikationssystem 400 umfasst eine Gruppe 200 von Detektionsvorrichtungen 100, wobei jeder Detektionsvorrichtung 100 der Gruppe 200 von Detektionsvorrichtungen 100 ein vorbestimmter Spreizcode zum Spreizen von Daten fest zugeordnet ist, und wobei die vorbestimmten Spreizcodes unterschiedlich sind. Das Kommunikationssystem 400 umfasst ferner eine Serverentität 300, welche ausgebildet ist, mit jeder Detektionsvorrichtung 100 der Gruppe 200 über ein Kommunikationsnetzwerk 401 zu kommunizieren.

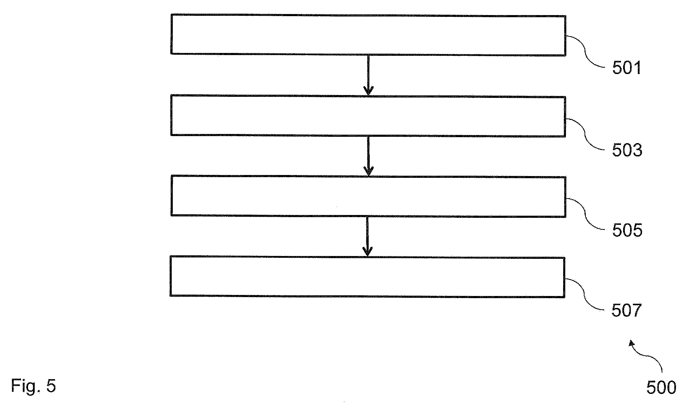

Fig. 5 zeigt ein schematisches Diagramm eines Verfahrens 500 zum Detektieren einer physikalischen Größe unter Verwendung einer Detektionsvorrichtung gemäß einer Ausführungsform.

Die Detektionsvorrichtung umfasst einen Detektor, einen Hardwarespeicher und eine Kommunikationsschnittstelle, wobei in dem Hardwarespeicher ein vorbestimmter Spreizcode zum Spreizen von Daten implementiert ist, wobei der vorbestimmte Spreizcode der Detektionsvorrichtung fest zugeordnet ist. Die Detektionsvorrichtung ist einer Gruppe von Detektionsvorrichtungen zugeordnet, wobei jeder Detektionsvorrichtung der Gruppe von Detektionsvorrichtungen ein vorbestimmter Spreizcode fest zugeordnet ist. Die Gruppe von Detektionsvorrichtungen ist ausgebildet, über ein Kommunikationsnetzwerk mit einer Serverentität zu kommunizieren.

Das Verfahren 500 umfasst ein Detektieren 501 der physikalischen Größe durch den Detektor, ein Ausgeben 503 der Daten durch den Detektor, welche die physikalische Größe repräsentieren, ein Spreizen 505 der Daten auf der Basis des vorbestimmten Spreizcodes durch die Kommunikationsschnittstelle, um gespreizte Daten zu erhalten, und ein Aussenden 507 der gespreizten Daten über das Kommunikationsnetzwerk an die Serverentität durch die Kommunikationsschnittstelle.

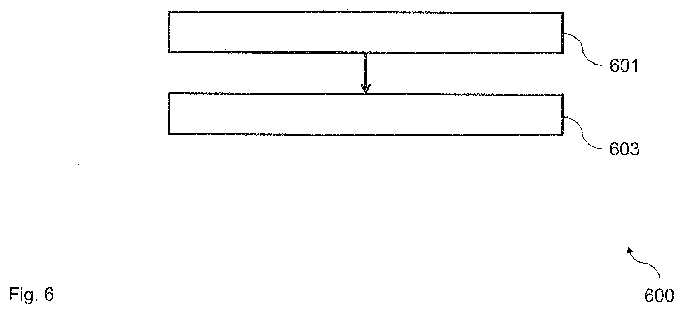

Fig. 6 zeigt ein schematisches Diagramm eines Verfahrens 600 zum Kommunizieren mit einer Detektionsvorrichtung über ein Kommunikationsnetzwerk unter Verwendung einer Serverentität gemäß einer Ausführungsform.

Die Serverentität umfasst eine Kommunikationsschnittstelle, einen Speicher und einen Prozessor, wobei in dem Speicher ein vorbestimmter Spreizcode der Detektionsvorrichtung abgelegt ist, und wobei der vorbestimmte Spreizcode der Detektionsvorrichtung fest zugeordnet ist. Die Detektionsvorrichtung ist einer Gruppe von Detektionsvorrichtungen zugeordnet, wobei jeder Detektionsvorrichtung der Gruppe von Detektionsvorrichtungen ein vorbestimmter Spreizcode fest zugeordnet ist. Die Gruppe von Detektionsvorrichtungen ist ausgebildet, über das Kommunikationsnetzwerk mit der Serverentität zu kommunizieren.

Die Detektionsvorrichtung ist ausgebildet, eine physikalische Größe zu detektieren. Die Detektionsvorrichtung ist ferner ausgebildet, Daten auszugeben, welche die physikalische Größe repräsentieren. In der Detektionsvorrichtung ist der vorbestimmte Spreizcode zum Spreizen der Daten implementiert, wobei der vorbestimmte Spreizcode der Detektionsvorrichtung fest zugeordnet ist. Die Detektionsvorrichtung ist ausgebildet, die Daten auf der Basis des vorbestimmten Spreizcodes zu spreizen, um gespreizte Daten zu erhalten, und die gespreizten Daten über das Kommunikationsnetzwerk an die Serverentität auszusenden.

Das Verfahren 600 umfasst ein Empfangen 601 der gespreizten Daten von der Detektionsvorrichtung über das Kommunikationsnetzwerk durch die Kommunikationsschnittstelle, und ein Entspreizen 603 der gespreizten Daten auf der Basis des vorbestimmten Spreizcodes der Detektionsvorrichtung durch den Prozessor, um die Daten zu erhalten.

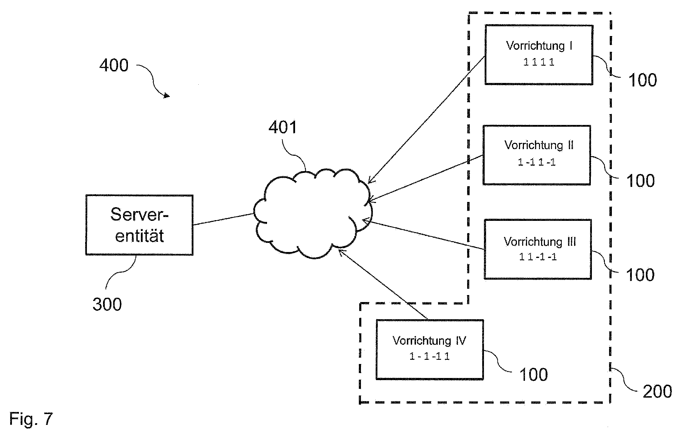

Fig. 7 zeigt ein schematisches Diagramm eines Kommunikationssystems 400 gemäß einer Ausführungsform.

Das Kommunikationssystem 400 umfasst eine Gruppe 200 von Detektionsvorrichtungen 100, wobei jeder Detektionsvorrichtung 100 der Gruppe 200 von Detektionsvorrichtungen 100 ein vorbestimmter Spreizcode zum Spreizen von Daten fest zugeordnet ist, und wobei die vorbestimmten Spreizcodes unterschiedlich sind. Einer ersten Detektionsvorrichtung 100 ist der Spreizcode [1 1 1 1] fest zugeordnet. Einer zweiten Detektionsvorrichtung 100 ist der Spreizcode [1 -1 1 -1] fest zugeordnet. Einer dritten Detektionsvorrichtung 100 ist der Spreizcode [1 1 -1 -1] fest zugeordnet. Einer vierten Detektionsvorrichtung 100 ist der Spreizcode [1 -1 -1 1] fest zugeordnet. Das Kommunikationssystem 400 umfasst ferner eine Serverentität 300, welche ausgebildet ist, mit jeder Detektionsvorrichtung 100 der Gruppe 200 über ein Kommunikationsnetzwerk 401 zu kommunizieren.

Der Zugriff auf den Kommunikationskanal kann folglich mittels Spreizcodes bzw. Spreizsequenzen geregelt werden, welche den Detektionsvorrichtungen 100 fest zugeordnet sind. Dadurch kann ein Sensornetzwerk realisiert werden, welches auf einem Code-Division-Multiple-Access (CDMA) Ansatz basiert.

Es kann eine stationäre Anordnung der Detektionsvorrichtungen 100 der Gruppe 200 verwendet werden, wobei jeder Detektionsvorrichtung 100 ein fester Spreizcode bzw. eine feste Spreizsequenz aus einer Menge von unkorrelierten Spreizcodes bzw. Spreizsequenzen zugeordnet ist.

Gemeinsam mit den gespreizten Daten kann jeweils auch eine vorbestimmte Identitätskennung der jeweiligen Detektionsvorrichtung 100 für die Zuordnung der Daten ausgesendet werden. Die Kommunikation zwischen jeder Detektionsvorrichtung 100 der Gruppe 200 und der Serverentität 300 kann schmalbandig sein, d.h. mit sehr geringer Datenrate erfolgen.

Das Kommunikationsnetzwerk 401 kann ein drahtloses Kommunikationsnetzwerk oder ein drahtgebundenes Kommunikationsnetzwerk sein. Die Kommunikation kann beispielsweise unter Verwendung eines IEEE 802.11 Kommunikationsstandards (Wireless Local Area Network, WLAN), eines IEEE 802.15.1 Kommunikationsstandards (Bluetooth), eines DSL Kommunikationsstandards oder eines 3GPP Kommunikationsstandards erfolgen. Insbesondere kann die Kommunikation unter Verwendung eines Mobilfunkstandards der fünften Generation (5G) oder einer weiteren Generation durchgeführt werden.

Zusammenfassend ergeben sich hierdurch mehrere Vorteile. Das Kommunikationssystem 400 kann kostengünstig implementiert werden. Zugleich können Kollisionen der Daten auf dem Kommunikationskanal vermieden werden. Das Kommunikationssystem 400 ermöglicht eine hohe Volumendatenrate, wodurch eine hohe Anzahl von Detektionsvorrichtungen unterstützt werden kann. Für die Kommunikation über das Kommunikationsnetzwerk 401 kann auf einen Rückkanal verzichtet werden.

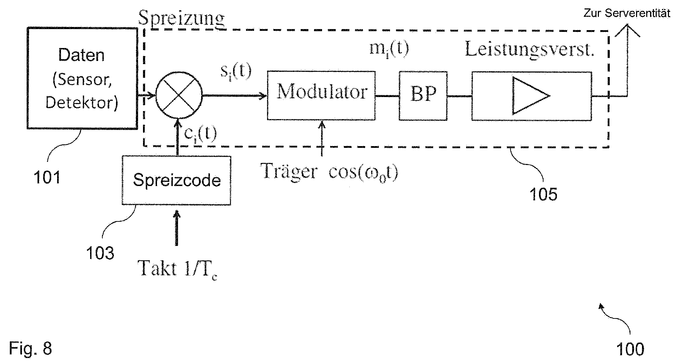

Fig. 8 zeigt ein schematisches Diagramm einer Detektionsvorrichtung 100 zum Detektieren einer physikalischen Größe gemäß einer Ausführungsform.

Die Detektionsvorrichtung 100 ist einer Gruppe von Detektionsvorrichtungen 100 zugeordnet, wobei jeder Detektionsvorrichtung 100 der Gruppe von Detektionsvorrichtungen 100 ein vorbestimmter Spreizcode fest zugeordnet ist, wobei die Gruppe von Detektionsvorrichtungen 100 ausgebildet ist, über ein Kommunikationsnetzwerk mit einer Serverentität zu kommunizieren.

Die Detektionsvorrichtung 100 umfasst einen Detektor 101 zum Detektieren der physikalischen Größe, wobei der Detektor 101 ausgebildet ist, Daten auszugeben, welche die physikalische Größe repräsentieren. Der Detektor 101 kann einen Sensor zum Bestimmen der physikalischen Größe umfassen. Die Detektionsvorrichtung 100 umfasst ferner einen Hardwarespeicher 103, in welchem ein vorbestimmter Spreizcode zum Spreizen der Daten implementiert ist, wobei der vorbestimmte Spreizcode der Detektionsvorrichtung 100 fest zugeordnet ist. Der Hardwarespeicher 103 kann durch einen Takt mit Taktrate $1/T_c$ betrieben werden. Der Spreizcode kann als Zeitsignal $c_i(t)$ bereitgestellt werden.

Die Detektionsvorrichtung 100 umfasst ferner eine Kommunikationsschnittstelle 105, welche ausgebildet ist, die Daten auf der Basis des vorbestimmten Spreizcodes zu spreizen, um gespreizte Daten zu erhalten, und die gespreizten Daten über das Kommunikationsnetzwerk an die Serverentität auszusenden. Die Kommunikationsschnittstelle 105 umfasst hierbei einen Multiplikator zum Multiplizieren der Daten mit dem Spreizcode. Die gespreizten Daten können als Zeitsignal $s_i(t)$ bereitgestellt werden. Die Kommunikationsschnittstelle 105 umfasst ferner einen Modulator zum Modulieren des Zeitsignals $s_i(t)$ mit einem Trägersignal $\cos(\omega_0 t)$, um ein moduliertes Zeitsignal $m_i(t)$ bereitzustellen. Die Kommunikationsschnittstelle 105 umfasst ferner einen Bandpass (BP) Filter sowie einen Leistungsverstärker, um das modulierte Zeitsignal $m_i(t)$ zur Serverentität auszusenden.

Jede Detektionsvorrichtung 100 der Gruppe von Detektionsvorrichtungen 100 kann die beschriebene Sendestruktur aufweisen. Mithin kann jede Detektionsvorrichtung 100 einen Direct-Sequence-Spread-Spectrum (DSSS) Ansatz verwendet und ein Code-Division-Multiple-Access (CDMA) Ansatz zum Zugriff auf den Kommunikationskanal realisiert werden.

Jeder Detektionsvorrichtung 100 kann jeweils ein eigener Spreizcode fest zugeordnet sein. Die Spreizcodes unterschiedlicher Detektionsvorrichtungen 100 einer Gruppe können dabei unkorreliert sein. Dies kann beispielsweise auf der Basis von Walsh-Funktionen unter Verwendung von Hadamard-Matrizen realisiert werden.

Im Folgenden sind exemplarische Hadamard-Matrizen $H_1$, $H_2$ und $H_4$ gezeigt:

$$H_1 = (1), H_2 = \begin{pmatrix} 1 & 1 \\ 1 & -1 \end{pmatrix}, H_4 = \begin{pmatrix} 1 & 1 & 1 & 1 \\ 1 & -1 & 1 & -1 \\ 1 & 1 & -1 & -1 \\ 1 & -1 & -1 & 1 \end{pmatrix}, \cdots$$

Die Zeilenvektoren sind dabei unkorreliert und entsprechen den Spreizcodes für die Spreizung der jeweiligen Daten. Die entsprechenden Hadamard-Sequenzen sind beispielsweise +/-1 Sequenzen, sodass die Spreizung durch eine einfache Invertierung des Vorzeichens realisiert werden kann. Im vorgenannten Beispiel mit der Hadamard-Matrix $H_4$ können beispielswiese vier Detektionsvorrichtungen 100 gleichzeitig auf den Kommunikationskanal zugreifen. Dieser Fall ist beispielhaft in der Figur dargestellt.

Die Detektionsvorrichtungen 100 der Gruppe können mithin jeweils fest zugewiesene, untereinander unkorrelierte Spreizcodes für die Kanaltrennung aufweisen. Die Anzahl der Detektionsvorrichtungen 100 innerhalb der Gruppe kann durch die Anzahl der Zeilen der Hadamard-Matrix begrenzt sein. Durch die Verwendung von Spreizcodes, welche für andere Teilnehmer des Kommunikationsnetzwerkes unbekannt sein können, kann zudem ein Abhörschutz hinsichtlich der Daten realisiert werden.

Gemäß einer Ausführungsform sind die Sendezeitpunkte der Detektionsvorrichtungen 100 innerhalb der Gruppe nicht vorgegeben und können beispielsweise durch einen jeweiligen Ladezustand eines Energiespeichers, welcher die jeweilige Detektionsvorrichtung 100 mit elektrischer Energie versorgt, bestimmt werden.

Gemäß einer Ausführungsform werden die gespreizten Daten als Datenpakete bereitgestellt, welche blockweise an die Serverentität übermittelt werden können. Gemäß einer Ausführungsform wird auf eine fortwährende Spreizung der Daten verzichtet.

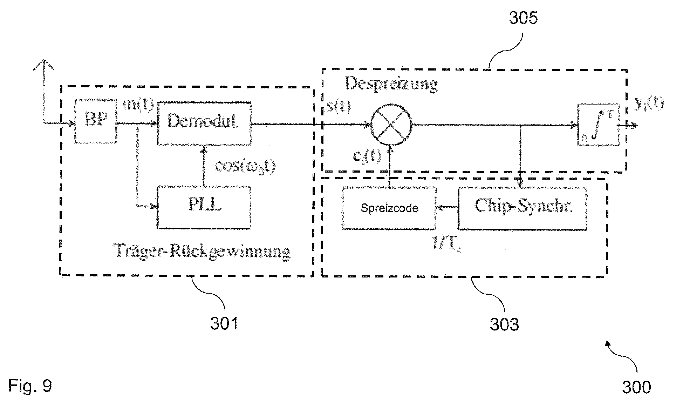

Fig. 9 zeigt ein schematisches Diagramm einer Serverentität 300 zum Kommunizieren mit einer Detektionsvorrichtung über ein Kommunikationsnetzwerk gemäß einer Ausführungsform.

Die Detektionsvorrichtung ist einer Gruppe von Detektionsvorrichtungen zugeordnet, wobei jeder Detektionsvorrichtung der Gruppe von Detektionsvorrichtungen ein vorbestimmter Spreizcode fest zugeordnet ist. Die Gruppe von Detektionsvorrichtungen ist ausgebildet, über das Kommunikationsnetzwerk mit der Serverentität 300 zu kommunizieren.

Die Detektionsvorrichtung ist ausgebildet, eine physikalische Größe zu detektieren. Die Detektionsvorrichtung ist ferner ausgebildet, Daten auszugeben, welche die physikalische Größe repräsentieren. In der Detektionsvorrichtung ist ein vorbestimmter Spreizcode zum Spreizen der Daten implementiert, wobei der vorbestimmte Spreizcode der Detektionsvorrichtung fest zugeordnet ist. Die Detektionsvorrichtung ist ausgebildet, die Daten auf der Basis des vorbestimmten Spreizcodes zu spreizen, um gespreizte Daten zu erhalten, und die gespreizten Daten über das Kommunikationsnetzwerk an die Serverentität 300 auszusenden.

Die Serverentität 300 umfasst eine Kommunikationsschnittstelle 301, welche ausgebildet ist, die gespreizten Daten von der Detektionsvorrichtung über das Kommunikationsnetzwerk zu empfangen. Die Kommunikationsschnittstelle 301 umfasst einen Bandpass (BP) Filter zum Bereitstellen eines Zeitsignals m(t). Die Kommunikationsschnittstelle 301 umfasst ferner einen Phasenregelkreis (engl. Phase-Locked-Loop, PLL) zur Trägerrückgewinnung auf der Basis des Zeitsignals m(t). Dabei wird ein Trägersignal $\cos(\omega_0 t)$ bereitgestellt. Die Kommunikationsschnittstelle 301 umfasst ferner einen Demodulator zum Bereitstellen eines Zeitsignals s(t) mit gespreizten Daten auf der Basis des Zeitsignals m(t) und des Trägersignals $\cos(\omega_0 t)$.

Die Serverentität 300 umfasst ferner einen Speicher 303, in welchem der vorbestimmte Spreizcode der Detektionsvorrichtung abgelegt ist, wobei der vorbestimmte Spreizcode der Detektionsvorrichtung fest zugeordnet ist. Der Speicher 303 umfasst ferner eine Komponente zur Chip-Synchronisation, welche einen Takt mit Taktrate $1/T_c$ bereitstellt. Der Spreizcode kann als Zeitsignal $c_i(t)$ bereitgestellt werden.

Die Serverentität 300 umfasst ferner einen Prozessor 305, welcher ausgebildet ist, die gespreizten Daten auf der Basis des vorbestimmten Spreizcodes der Detektionsvorrichtung zu entspreizen, um die Daten zu erhalten. Der Prozessor 305 umfasst einen Multiplikator zum Multiplizieren des Zeitsignals s(t) mit dem Zeitsignal $c_i(t)$, wodurch eine Entspreizung bzw. Despreizung der gespreizten Daten erreicht werden kann. Der Prozessor 305 umfasst ferner einen Integrator, welcher dem Multiplikator nachgeschaltet ist und eine Integration über ein Zeitintervall [0 T] oder ein Zeitintervall mit Zeitdauer T durchführen kann. Am Ausgang des Integrators werden die Daten als Zeitsignal $y_i(t)$ bereitgestellt.

Mithin kann ein Empfänger für die Daten in der Serverentität, beispielsweise einer Basisstation oder einem Controller, implementiert werden. Der überwiegende Implementierungsaufwand kann mithin dorthin verlagert werden. Der Empfänger kann ein Standard-Empfänger sein. Gemäß einer Ausführungsform wird ein Rake-Empfänger eingesetzt.

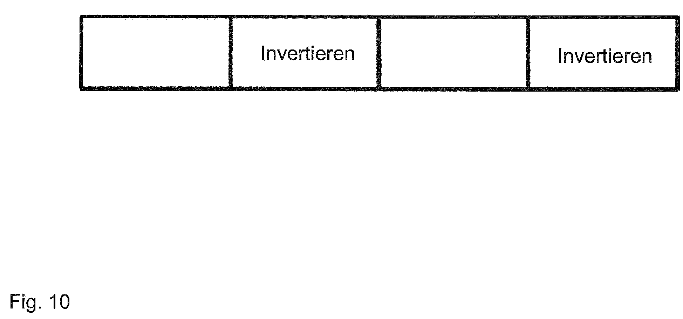

Fig. 10 zeigt ein schematisches Diagramm eines Schieberegisters einer Detektionsvorrichtung zum Spreizen von Daten gemäß einer Ausführungsform.

Durch die feste Zuordnung eines Spreizcodes zu einer Detektionsvorrichtung kann der Spreizcode zur Signalverarbeitung in der Detektionsvorrichtung fest implementiert werden. Das Schieberegister, welches den Spreizcode repräsentiert, kann dem Ausgang des Detektors nachgeschaltet sein, um eine automatische Spreizung der Daten zu realisieren. Die resultierende Sequenz kann sich wiederholende Abschnitte aufweisen, wodurch eine Zyklostationarität der resultierenden Sequenz entsteht, welche gegebenenfalls zur Synchronisation verwendet werden kann.

Der Spreizcode kann bei fester Zuordnung hardwaretechnisch mittels des Schieberegisters realisiert werden, wobei das Schieberegister übertaktet sein kann. In dem Schieberegister können die Vorzeichen der jeweiligen Zellen nach Vorgabe invertiert werden, wie es beispielhaft bezüglich der zweiten Detektionsvorrichtung mit Spreizcode [1 -1 1 -1] dargestellt ist.

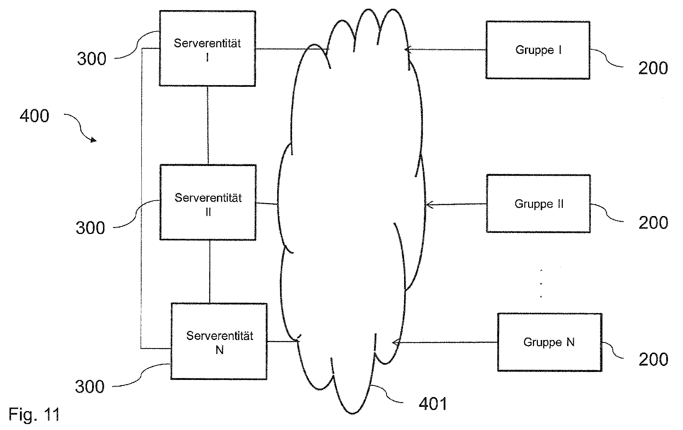

Fig. 11 zeigt ein schematisches Diagramm eines Kommunikationssystems 400 gemäß einer Ausführungsform. Das Kommunikationssystem 400 umfasst eine Mehrzahl von Gruppen 200 von Detektionsvorrichtungen sowie eine Mehrzahl von Serverentitäten 300. Die Mehrzahl von Gruppen 200 von Detektionsvorrichtungen kann mit der Mehrzahl von Serverentitäten 300 über ein Kommunikationsnetzwerk 401 kommunizieren.

Die Gruppen 200 umfassen jeweils Detektionsvorrichtungen. Jeder Gruppe 200 ist eine zugehörige Serverentität 300 zugeordnet. Die Serverentitäten 300 können sich untereinander bezüglich der vorbestimmten Spreizcodes innerhalb der jeweiligen Gruppe austauschen. Auf diese Weise werden weitere Kollisionen bei der Kommunikation über das Kommunikationsnetzwerk 401 vermieden. Ferner wird die Systemkapazität weiter erhöht.

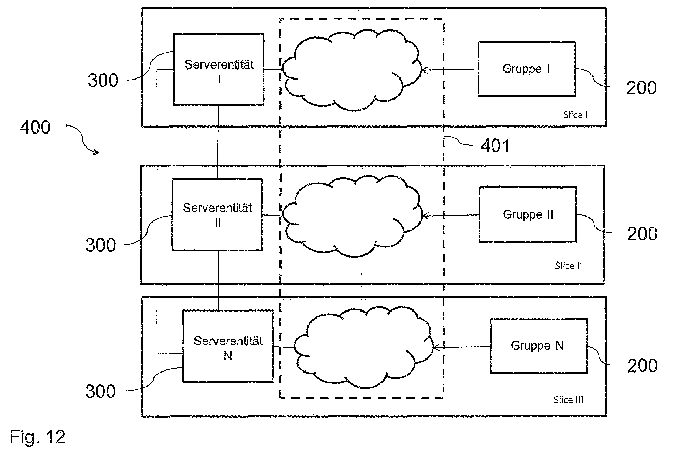

Fig. 12 zeigt ein schematisches Diagramm eines Kommunikationssystems 400 gemäß einer Ausführungsform. Das Kommunikationssystem 400 umfasst eine Mehrzahl von Gruppen 200 von Detektionsvorrichtungen sowie eine Mehrzahl von Serverentitäten 300. Die Mehrzahl von Gruppen 200 von Detektionsvorrichtungen kann mit der Mehrzahl von Serverentitäten 300 über ein Kommunikationsnetzwerk 401 kommunizieren.

Das Kommunikationsnetzwerk 401 umfasst eine Mehrzahl von Subnetzwerken. Jede Gruppe 200 ist mit einer jeweiligen Serverentität 300 einem jeweiligen Subnetzwerk zugeordnet. Das Kommunikationsnetzwerk 401 kann ein Kommunikationsnetzwerk der fünften Generation (5G) oder einer weiteren Generation sein, wobei jedes Subnetzwerk einem Slice des Kommunikationsnetzwerkes 401 zugeordnet ist. Die Kommunikation zwischen den Serverentitäten 300 kann in einer Slice-Managementschicht, welche über der Infrastrukturschicht liegen kann, verwaltet werden.

BEZUGSZEICHENLISTE

100    Detektionsvorrichtung
101    Detektor
103    Hardwarespeicher
105    Kommunikationsschnittstelle

200    Gruppe von Detektionsvorrichtungen

300    Serverentität
301    Kommunikationsschnittstelle
303    Speicher
305    Prozessor

400    Kommunikationssystem
401    Kommunikationsnetzwerk

500    Verfahren zum Detektieren einer physikalischen Größe
501    Detektieren
503    Ausgeben
505    Spreizen
507    Aussenden

600    Verfahren zum Kommunizieren mit einer Detektionsvorrichtung
601    Empfangen
603    Entspreizen

**Patentansprüche**

**1.** Detektionsvorrichtung (100) zum Detektieren einer physikalischen Größe, wobei die Detektionsvorrichtung (100) einer Gruppe (200) von Detektionsvorrichtungen (100) zugeordnet ist, wobei jeder Detektionsvorrichtung (100) der Gruppe (200) von Detektionsvorrichtungen (100) ein vorbestimmter Spreizcode fest zugeordnet ist, wobei die Gruppe (200) von Detektionsvorrichtungen (100) ausgebildet ist, über ein Kommunikationsnetzwerk (401) mit einer Serverentität (300) zu kommunizieren, mit:

einem Detektor (101) zum Detektieren der physikalischen Größe, wobei der Detektor (101) ausgebildet ist, Daten auszugeben, welche die physikalische Größe repräsentieren;
einem Hardwarespeicher (103), in welchem ein vorbestimmter Spreizcode zum Spreizen der Daten implementiert ist, wobei der vorbestimmte Spreizcode der Detektionsvorrichtung (100) fest zugeordnet ist; und
einer Kommunikationsschnittstelle (105), welche ausgebildet ist, die Daten auf der Basis des vorbestimmten Spreizcodes zu spreizen, um gespreizte Daten zu erhalten, und die gespreizten Daten über das Kommunikationsnetzwerk (401) an die Serverentität (300) auszusenden.

**2.** Detektionsvorrichtung (100) nach Anspruch 1, wobei die Kommunikationsschnittstelle (105) ausgebildet ist, die gespreizten Daten zu einem vorbestimmten Sendezeitpunkt an die Serverentität (300) auszusenden.

**3.** Detektionsvorrichtung (100) nach einem der vorstehenden Ansprüche, wobei der Detektor (101) ausgebildet ist, eine Temperatur, eine Feuchtigkeit, eine Energie, eine Leistung, eine Position, eine Geschwindigkeit, eine Beschleunigung, einen Winkel, eine Winkelgeschwindigkeit, eine Winkelbeschleunigung, eine Drehzahl, eine Kraft, ein Drehmoment, einen Energieverbrauch, einen Wasserverbrauch, einen Wärmeverbrauch oder einen Kraftstoffverbrauch als physikalische Größe zu bestimmen.

4. Detektionsvorrichtung (100) nach einem der vorstehenden Ansprüche, wobei der Hardwarespeicher (103) ein Festwertspeicher ist, und wobei der vorbestimmte Spreizcode der Detektionsvorrichtung (100) in dem Hardwarespeicher (103) fest verdrahtet abgelegt ist.

5. Detektionsvorrichtung (100) nach einem der vorstehenden Ansprüche, wobei der vorbestimmte Spreizcode ein Walsh-Code, ein Gold-Code oder ein Kasami-Code ist.

6. Detektionsvorrichtung (100) nach einem der vorstehenden Ansprüche, wobei das Kommunikationsnetzwerk (401) eine Mehrzahl von Subnetzwerken umfasst, und wobei die Kommunikationsschnittstelle (105) ausgebildet ist, die gespreizten Daten über ein Subnetzwerk der Mehrzahl von Subnetzwerken an die Serverentität (300) auszusenden.

7. Gruppe (200) von Detektionsvorrichtungen (100) nach einem der Ansprüche 1 bis 6, wobei jeder Detektionsvorrichtung (100) der Gruppe (200) von Detektionsvorrichtungen (100) ein vorbestimmter Spreizcode zum Spreizen von Daten fest zugeordnet ist, und wobei die vorbestimmten Spreizcodes unterschiedlich sind.

8. Gruppe (200) nach Anspruch 7, wobei jede Detektionsvorrichtung (100) der Gruppe (200) von Detektionsvorrichtungen (100) ortsfest angeordnet ist.

9. Serverentität (300) zum Kommunizieren mit einer Detektionsvorrichtung (100) über ein Kommunikationsnetzwerk (401), wobei die Detektionsvorrichtung (100) einer Gruppe (200) von Detektionsvorrichtungen (100) zugeordnet ist, wobei jeder Detektionsvorrichtung (100) der Gruppe (200) von Detektionsvorrichtungen (100) ein vorbestimmter Spreizcode fest zugeordnet ist, wobei die Gruppe (200) von Detektionsvorrichtungen (100) ausgebildet ist, über das Kommunikationsnetzwerk (401) mit der Serverentität (300) zu kommunizieren, wobei die Detektionsvorrichtung (100) ausgebildet ist, eine physikalische Größe zu detektieren, wobei die Detektionsvorrichtung (100) ausgebildet ist, Daten auszugeben, welche die physikalische Größe repräsentieren, wobei in der Detektionsvorrichtung (100) ein vorbestimmter Spreizcode zum Spreizen der Daten implementiert ist, wobei der vorbestimmte Spreizcode der Detektionsvorrichtung (100) fest zugeordnet ist, wobei die Detektionsvorrichtung (100) ausgebildet ist, die Daten auf der Basis des vorbestimmten Spreizcodes zu spreizen, um gespreizte Daten zu erhalten, und die gespreizten Daten über das Kommunikationsnetzwerk (401) an die Serverentität (300) auszusenden, mit:

einer Kommunikationsschnittstelle (301), welche ausgebildet ist, die gespreizten Daten von der Detektionsvorrichtung (100) über das Kommunikationsnetzwerk (401) zu empfangen;
einem Speicher (303), in welchem der vorbestimmte Spreizcode der Detektionsvorrichtung (100) abgelegt ist, wobei der vorbestimmte Spreizcode der Detektionsvorrichtung (100) fest zugeordnet ist; und
einem Prozessor (305), welcher ausgebildet ist, die gespreizten Daten auf der Basis des vorbestimmten Spreizcodes der Detektionsvorrichtung (100) zu entspreizen, um die Daten zu erhalten.

10. Kommunikationssystem (400), mit:

einer Gruppe (200) von Detektionsvorrichtungen (100) nach einem der Ansprüche 1 bis 6, wobei jeder Detektionsvorrichtung (100) der Gruppe (200) von Detektionsvorrichtungen (100) ein vorbestimmter Spreizcode zum Spreizen von Daten fest zugeordnet ist, und wobei die vorbestimmten Spreizcodes unterschiedlich sind; und
einer Serverentität (300) nach Anspruch 9, welche ausgebildet ist, mit jeder Detektionsvorrichtung (100) der Gruppe (200) über ein Kommunikationsnetzwerk (401) zu kommunizieren.

11. Kommunikationssystem (400) nach Anspruch 10, mit:

einer weiteren Gruppe (200) von Detektionsvorrichtungen (100) nach einem der Ansprüche 1 bis 6, wobei jeder Detektionsvorrichtung (100) der weiteren Gruppe (200) von Detektionsvorrichtungen (100) ein vorbestimmter Spreizcode zum Spreizen von Daten fest zugeordnet ist, und wobei die vorbestimmten Spreizcodes unterschiedlich sind; und
einer weiteren Serverentität (300) nach Anspruch 9, welche ausgebildet ist, mit jeder Detektionsvorrichtung (100) der weiteren Gruppe (200) über das Kommunikationsnetzwerk (401) zu kommunizieren.

12. Kommunikationssystem (400) nach Anspruch 11, wobei das Kommunikationsnetzwerk (401) ein Kommunikationsnetzwerk der fünften Generation (5G) oder einer weiteren Generation ist, wobei das Kommunikationsnetzwerk (401) ein Subnetzwerk, insbesondere ein Slice, und ein weiteres Subnetzwerk, insbesondere ein weiteres Slice, umfasst, wobei die Gruppe (200) von Detektionsvorrichtungen (100) und die Serverentität (300) dem Subnetzwerk zugeordnet sind, und wobei die weitere Gruppe (200) von Detektionsvorrichtungen (100) und die weitere Serverentität (300) dem weiteren Subnetzwerk zugeordnet sind.

13. Verfahren (500) zum Detektieren einer physikalischen Größe unter Verwendung einer Detektionsvorrichtung (100), wobei die Detektionsvorrichtung (100) einen Detektor (101), einen Hardwarespeicher (103) und eine Kommunikationsschnittstelle (105) umfasst, wobei in dem Hardwarespeicher (103) ein vorbestimmter Spreizcode zum Spreizen von Daten implementiert ist, wobei der vorbestimmte Spreizcode der Detektionsvorrichtung (100) fest zugeordnet ist, wobei die Detektionsvorrichtung (100) einer Gruppe (200) von Detektionsvorrichtungen (100) zugeordnet ist, wobei jeder Detektionsvorrichtung (100) der Gruppe (200) von Detektionsvorrichtungen (100) ein vorbestimmter Spreizcode fest zugeordnet ist, wobei die Gruppe (200) von Detektionsvorrichtungen (100) ausgebildet ist, über ein Kommunikationsnetzwerk (401) mit einer Serverentität (300) zu kommunizieren, mit:

Detektieren (501) der physikalischen Größe durch den Detektor (101);
Ausgeben (503) der Daten durch den Detektor (101), welche die physikalische Größe repräsentieren;
Spreizen (505) der Daten auf der Basis des vorbestimmten Spreizcodes durch die Kommunikationsschnittstelle (105), um gespreizte Daten zu erhalten; und
Aussenden (507) der gespreizten Daten über das Kommunikationsnetzwerk (401) an die Serverentität (300) durch die Kommunikationsschnittstelle (105).

14. Verfahren (600) zum Kommunizieren mit einer Detektionsvorrichtung (100) über ein Kommunikationsnetzwerk (401) unter Verwendung einer Serverentität (300), wobei die Serverentität (300) eine Kommunikationsschnittstelle (301), einen Speicher (303) und einen Prozessor (305) umfasst, wobei in dem Speicher (303) ein vorbestimmter Spreizcode der Detektionsvorrichtung (100) abgelegt ist, wobei der vorbestimmte Spreizcode der Detektionsvorrichtung (100) fest zugeordnet ist, wobei die Detektionsvorrichtung (100) einer Gruppe (200) von Detektionsvorrichtungen (100) zugeordnet ist, wobei jeder Detektionsvorrichtung (100) der Gruppe (200) von Detektionsvorrichtungen (100) ein vorbestimmter Spreizcode fest zugeordnet ist, wobei die Gruppe (200) von Detektionsvorrichtungen (100) ausgebildet ist, über das Kommunikationsnetzwerk (401) mit der Serverentität (300) zu kommunizieren, wobei die Detektionsvorrichtung (100) ausgebildet ist, eine physikalische Größe zu detektieren, wobei die Detektionsvorrichtung (100) ausgebildet ist, Daten auszugeben, welche die physikalische Größe repräsentieren, wobei in der Detektionsvorrichtung (100) der vorbestimmte Spreizcode zum Spreizen der Daten implementiert ist, wobei der vorbestimmte Spreizcode der Detektionsvorrichtung (100) fest zugeordnet ist, wobei die Detektionsvorrichtung (100) ausgebildet ist, die Daten auf der Basis des vorbestimmten Spreizcodes zu spreizen, um gespreizte Daten zu erhalten, und die gespreizten Daten über das Kommunikationsnetzwerk (401) an die Serverentität (300) auszusenden, mit:

Empfangen (601) der gespreizten Daten von der Detektionsvorrichtung (100) über das Kommunikationsnetzwerk (401) durch die Kommunikationsschnittstelle (301); und
Entspreizen (603) der gespreizten Daten auf der Basis des vorbestimmten Spreizcodes der Detektionsvorrichtung (100) durch den Prozessor (305), um die Daten zu erhalten.

15. Computerprogramm mit einem Programmcode zum Ausführen des Verfahrens (500) nach Anspruch 13 oder des Verfahrens (600) nach Anspruch 14, wenn der Programmcode auf einem Computer ausgeführt wird.

Fig. 1

Fig. 2

200

Fig. 3

Fig. 4

Fig. 5

601

603

Fig. 6

600

Fig. 7

Fig. 8

305

Despreizung

BP  m(t)  Demodul.  s(t)  $\bigotimes$  $\int_0^T$  $y_i(t)$

$\cos(\omega_0 t)$  $c_i(t)$

PLL  Spreizcode  $\leftarrow$  Chip-Synchr.

$1/T_c$

Träger-Rückgewinnung

301  303  300

Fig. 9

| | Invertieren | | Invertieren |
|---|---|---|---|

Fig. 10

300

400

300

300

Serverentität
I

Serverentität
II

Serverentität
N

Gruppe I

Gruppe II

Gruppe N

200

200

200

401

Fig. 11

Fig. 12

**Europäisches Patentamt**
**European Patent Office**
**Office européen des brevets**

# EUROPÄISCHER RECHERCHENBERICHT

Nummer der Anmeldung

EP 16 17 9555

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2006/034348 A1 (SCHAEFER TIMOTHY M [US] ET AL) 16. Februar 2006 (2006-02-16)<br>* Zusammenfassung *<br>* Absatz [0001] - Absatz [0011] *<br>* Absatz [0023] - Absatz [0074] *<br>* Abbildungen 1-11b *<br>* Absatz [0011] - Absatz [0022] *<br>----- | 1-15 | INV.<br>H04W4/00<br>H04W4/20<br>H04L29/08 |
| X | WO 2012/121614 A1 (AUCKLAND UNIVERSIVES LTD [NZ]; BERBER STEVAN [NZ]; FANG SHUDONG [NZ]) 13. September 2012 (2012-09-13)<br>* Zusammenfassung *<br>* Absatz [0006] - Absatz [0021] *<br>* Absatz [0033] - Absatz [0076] *<br>* Abbildungen 1-10 *<br>----- | 1-15 | |
| X | US 2015/080000 A1 (WEBB WILLIAM [GB] ET AL) 19. März 2015 (2015-03-19)<br>* Zusammenfassung *<br>* Absatz [0012] - Absatz [0088] *<br>* Abbildung 1 *<br>----- | 1-15 | RECHERCHIERTE SACHGEBIETE (IPC) |
| X | US 2013/343256 A1 (ZAKRZEWSKI ROBERT [GB]) 26. Dezember 2013 (2013-12-26)<br>* Zusammenfassung *<br>* Absatz [0005] - Absatz [0017] *<br>* Absatz [0033] - Absatz [0142] *<br>* Seiten 1-14 *<br>----- | 1-15 | H04W<br>H04L |

Der vorliegende Recherchenbericht wurde für alle Patentansprüche erstellt

| Recherchenort | Abschlußdatum der Recherche | Prüfer |
|---|---|---|
| München | 13. Januar 2017 | Körbler, Günther |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 16 17 9555

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-01-2017

| Im Recherchenbericht angeführtes Patentdokument | Datum der Veröffentlichung | Mitglied(er) der Patentfamilie | Datum der Veröffentlichung |
|---|---|---|---|
| US 2006034348 A1 | 16-02-2006 | EP 1776774 A1<br>US 2006034348 A1<br>US 2010066506 A1<br>WO 2006020490 A1 | 25-04-2007<br>16-02-2006<br>18-03-2010<br>23-02-2006 |
| WO 2012121614 A1 | 13-09-2012 | KEINE | |
| US 2015080000 A1 | 19-03-2015 | GB 2491840 A<br>US 2015080000 A1<br>WO 2012171800 A1 | 19-12-2012<br>19-03-2015<br>20-12-2012 |
| US 2013343256 A1 | 26-12-2013 | CN 103222289 A<br>EP 2633714 A1<br>GB 2484922 A<br>JP 5923098 B2<br>JP 2013546244 A<br>KR 20140037012 A<br>US 2013343256 A1<br>US 2016381724 A1<br>WO 2012056210 A1 | 24-07-2013<br>04-09-2013<br>02-05-2012<br>24-05-2016<br>26-12-2013<br>26-03-2014<br>26-12-2013<br>29-12-2016<br>03-05-2012 |

EPO FORM P0461

Für nähere Einzelheiten zu diesem Anhang : siehe Amtsblatt des Europäischen Patentamts, Nr.12/82